# EUROPEAN PATENT APPLICATION

(11) **EP 3 540 682 A1**
(43) Date of publication of application: **18.09.2019**
(21) Application number: 18162042.8
(22) Date of filing: 15.03.2018
(51) Int. Cl.: G06Q 50/30, G06Q 10/08

(54) **AN ARRANGEMENT AND A METHOD FOR IDENTIFYING AN OBJECT IN CONNECTION WITH TRANSPORTATION**

(71) Applicant: TAMTRON OY, 33561 Tampere (FI)
(72) Inventor: Asikainen, Pentti, 00330 Helsinki (FI)
(74) Representative: Heinonen & Co

(57) **Abstract**

The invention relates to an arrangement and a method for identifying an object in connection with transportation by utilizing a visual identification. Now commonly used RFID and barcode techniques have their disadvantages, so other system to identify easily an object in connection with transportation is needed. The present invention comprises a number of data collecting means for collecting visual data, and data processing means for obtaining and storing collected data, wherein said data processing means comprises a database of identifiers for identifying an object in connection with transportation by comparing collected data to said identifiers.

## Description

### Technical field

Generally, the invention relates to an arrangement and a method for identifying an object in connection with transportation, and more particularly, the invention relates to an arrangement and a method for identifying an object in connection with transportation by utilizing image recognition.

### Background technology

The present logistic flows are enormous while large quantities of goods are transported from various starting points to various destinations. Thus inventory is an important field of technology in the transport of goods. From prior art we know e.g. solutions, wherein transport means collects certain goods according to the freight warrant from e.g. an accurately determined port of the starting point, or alternatively some loader loads the transport means within the loading site. Goods can nowadays be identified with e.g. RFID means or with more classic methods, such as a bar code, thus facilitating the logistics and inventory in both loading and unloading goods into or from the transport means. It is also known from the prior art to use a freight warrant and/or receipt in connection with loading transport means, wherein the freight warrant / receipt is delivered to the receiver of the goods e.g. together with the transport means.

However, some problems are related to the prior art. Due to e.g. large logistic flows together with human factors, a load handling person may easily mistake transport means, for example, and load the goods into wrong transport means. Further, e.g. maintaining bookkeeping on loading and observing weight of transport means is tedious due to continuous loading and unloading, and it may be difficult for the driver of the transport means to continuously know the information relating to the exact quantity, weight and destination of the cargo, and above all, whether all goods aboard are meant just for the concerned transport means for transportation.

In addition, the identification procedure with RFID means may also be difficult. In order to working properly, RFID tags need a power source, and if batteries are used they run out eventually. The RFID tags may also fall off or get broken, which require a regular checking that RFID tags are still in their place and working. Also providing RFID means in all the objects that are desired to be identified may take time and increase the costs.

### Summary of the invention

It is an objective of the present invention to implement a solution, wherein the previously mentioned drawbacks of the prior art could be reduced. In particular, the invention is implied to solve how to easily and reliably identify an object in connection with transportation.

The objective of the invention is met with the features of the enclosed claims.

In accordance with one aspect the arrangement for identifying an object in connection with transportation comprises
- a number of data collecting means for collecting image data, the image data comprising images of objects in connection with transportation, and
- data processing means for obtaining, storing, and processing the collected data, the data processing means comprising at least one cloud server,
wherein said data processing means comprises a database of objects in connection with transportation, the database comprising object-related identifiers for identifying the object, and
wherein the data processing means are arranged to recognize an object in connection with transportation from the collected image data, and to compare the data of the recognized object with the identifiers of the object database, and based on the comparison to identify the recognized object.

In an embodiment, the identifiers in the arrangement are selected from a group comprising at least: register plates, serial numbers, other characters, pictures, decorations, marks, forms, colors, markings, damages, deviations and equipment. It may also include technical details like the number of axles/wheels in a transport means. The person skilled in the art will understand that any kinds of visual identifiers can be used for identifying objects, and the identifying can also be based on more than one identifier in order to increase reliability. The identifiers may also be prioritized.

For example, a register plate information or serial number may be primarily used for identification, but if a reliable identification is not achieved then other suitable identifiers may be used.

In an embodiment, the object in connection with transportation is selected from a group comprising at least: trucks, trains, train wagons, ships, containers, lorries, cars, heavy-duty vehicles, load types, locations of the load, loading sites and persons in connection with transportation. The person skilled in the art will understand that also other kinds of objects relating to transporting can be identified with the present arrangement.

In an embodiment, the data collecting means is selected from a group comprising at least: cameras, video cameras, surveillance cameras and/or infrared cameras. The person skilled in the art will understand that different types of data collecting means can be utilized for collecting visual data with a purpose to identify an object.

The collected data is obtained, stored and processed in a number of cloud server computers serving as data processing means. In an embodiment, it is possible to apply artificial intelligence, such as a self-learning neural network, in recognizing objects from image data and/or in identifying the object based on the identifiers of the database.

According to an embodiment of the present invention, a method for identifying an object in connection with transportation comprising
- collecting image data from a number of locations, the image data comprising images of objects in connection with transportation,
- obtaining, the collected data to at least one cloud server for storing and processing the collected data, and
- providing a database of objects in connection with transportation, and providing the database with object-related identifiers for identifying the object,
wherein an object in connection with transportation is recognized from the collected image data, and the data of the recognized object is compared with the identifiers of the object database, and based on the comparison the recognized object is identified.

In an embodiment, the method further comprises an initializing step, wherein a number of identifiers relating to a number of objects are stored in said database.

In an embodiment, after identifying the object the database is updated by adding the new collected identifier(s) to the object-related identifiers of the database.

In an embodiment, the database is provided with further transportation related data of objects on the database. When the object is a transport means, the database can be provided with e.g. data from the group of weight, number of axles/wheels, transportation route, latest location, loading instructions, driver information, and other specifications of the transportation means. When the object is a piece of load, the database can be provided with e.g. data from the group of weight, size, load type / material, type and contents of a box/container, destination, point of origin, present location, transportation route, loading instructions, and other specifications of the load.

In an embodiment, after identifying the object, transportation related data of the object is read from the database for logistic purposes.

Significant advantages can be achieved with the present invention when compared to prior art solutions. Using cameras and/or video cameras for identifying may provide means for utilizing an existing system with a minimal modification of hardware if any. For example, many loading sites already have surveillance cameras arranged to record the area. The data gathered from these cameras and/or other data collecting means can form a big data type knowledge base for identifying various types of objects.

The visual identification may be used for identifying many kinds of objects from transport means to the load, including also loading means, loading sites and personnel. The arrangement and the method may enable collecting various kinds of information relating to transportation, such as what load a particular transport means comprises and in what position the load is positioned in the transport means, for example.

The arrangement may be arranged to identify the type of material when loading it. For example, type of gravel, or tree species can be identified from the visual data of the load by comparing the image data to image samples of known material types, for example.

It is also possible to estimate the distribution of load weight on the transport means on the basis of the image data. In case of exceeding maximum axle weight, for example, the arrangement may give an alarm. Also, it can be possible to analyze on the images whether the load is stable on the transport means, and to give an alarm if there is a considerable risk of falling or other instability.

It is also possible to store information on the load positions of a transport means when loading. This information can then be used later for finding a correct piece of load during the unloading of the transport means. It is also possible that the loading and unloading of possibly identified loads to/from a possibly identified transport means are controlled by the system based on the image data, whereby the arrangement may also optimize the loading and unloading procedures including the selection of the positions of load in the transport means and possibly selection of a transport route. The instructions for loading/unloading can be provided by the system to a loader/unloader handling person or an automated robot. A person can receive this information on a tablet computer, for example, showing an image of the loading site with instructing graphical signs.

The arrangement may also be arranged to offer information relating to e.g. transportation means or load by taking an image of the transport means/load with e.g. a smart phone, transferring the image data to cloud server, identifying the object and returning the object related data to the smart phone for display.

The information on the object available on the database may comprise e.g. a load-carrying limit, the origin of the delivery, recipient, consignor, the name and type of the material, security classification, to name a few. These information can be very useful also e.g. in accident situation, where rescue service needs those information fast.

In the present document, the term "visual identification" or "image identification" refers to identifying an object in a number of photos and/or a number of videos.

In the present document, the term "object in connection with transportation" has been used widely to refer all kinds of objects that appears in connection with transport means, such as, but not limited to transport means itself and parts of it, pieces of load, load types, loading places and/or persons in connection with transporting.

In the present invention, the term "transport means" refers to widely to all kinds of means used for transporting, such as, but not limited to trucks, trains, ships, containers, lorries, cars and/or heavy-duty vehicles.

In the present invention, the term "load handling means" refers e.g. to. a loader or unloading means, such as a wheel loader, a forklift, a container crane, an industrial crane or a timber crane.

Further, in the present document, the term "a group of identifiers" comprises a number of things that may be possible to recognize in a photo and/or a video, such as, but not limited to, register plates, serial numbers, another numbers and/or letters, pictures, decorations, forms, colors, markings, damages, deviations, equipment and/or other details.

The expression "a number of" refers herein to any positive integer starting from one (1), e.g. to one, two, or three.

The terms "a" and "an", as used herein, are defined as one or more than one.

### Short description of the drawings

Next, the invention is described in more detail with reference to the appended drawings, in which
Fig. 1 illustrates an exemplary arrangement for identifying an object in connection with transportation according to an embodiment of the present invention,
Fig. 2 is a flow chart of a method according to an embodiment of the present invention.

### Detailed description of the embodiments

In the Figures herein, unique features receive unique reference numerals, while features that are the same in more than one drawing receive the same reference numerals throughout.

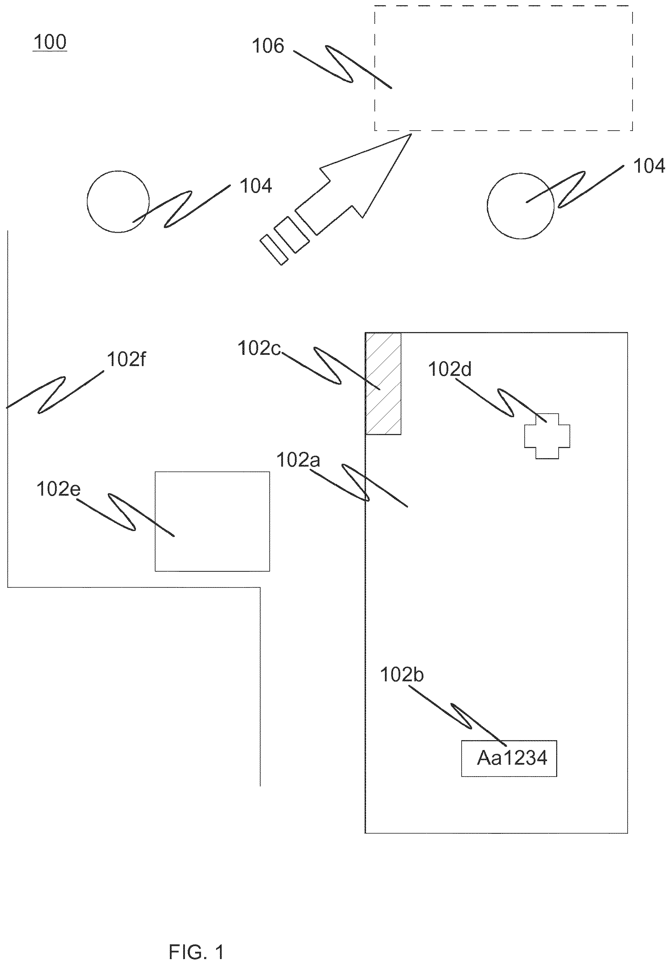

Fig. 1 illustrates an exemplary arrangement for identifying an object in connection with transportation according to an embodiment of the present invention. An arrangement 100 for identifying an object 102a in connection with transportation comprises a number of data collecting means 104 for collecting image/video data, and data processing means 106 for obtaining and storing collected data.

Fig. 1 presents some exemplary identifiers that can be used for identification of an object, such as a transport means 102a. An image of the transport means as a whole can be an identifier, but more specific identifiers include a register plate 102b, a form or a damage of the transport means 102c, and a figure on the transport means 102d, to name a few. A load 102e and a loading site 102f can be objects which can be identified in a similar manner. In some situations the load and the loading site can also serve as an identifier among others for identifying the transport means. The person skilled in the art will understand that there can be more objects and identifiers, which can be used for identifying and/or storing in the database.

Data collecting means 104, such as one or more cameras and/or video cameras, are arranged to take a photo/photos and/or video/videos. Depending on an embodiment, the photos are captured regularly and/or video recording is on all the time. In another embodiment, the arrangement comprises means, such as one or more motion sensors, for starting capturing/recording.

The collected data is transferred to the data processing means by using some known techniques, such as a number of wired and/or wireless transmitters, receivers, and/or transceivers for communication with other devices such as terminals and/or network infrastructure(s). For example, an integrated or a removable network adapter may be provided. Non-limiting examples of the generally applicable technologies include WiFi/WLAN (Wireless LAN, wireless local area network), LAN, Ethernet, USB (Universal Serial Bus), GSM (Global System for Mobile Communications), GPRS (General Packet Radio Service), EDGE (Enhanced Data rates for Global Evolution), UMTS (Universal Mobile Telecommunications System), WCDMA (wideband code division multiple access), CDMA2000, LTE (Long Term Evolution), and Blue-tooth.

The data processing means comprises at least one server, which server can be provided as a cloud server, for example, The server(s) can consist of hardware or software, which software is adapted to execute functions specified for the server in order to recognizing and identifying an object based on image data, according to the present invention. When cloud server is used it is possible to use and update the collected data and database for identification of objects in various locations.

The data processing means comprises a database of objects and object-related identifiers for identifying an object in connection with transportation by recognizing objects from collected data and comparing the recognized object data to said identifiers. When the collected data matches with identifiers of a specific object in the database, the object of the collected data is identified to be the specific object.

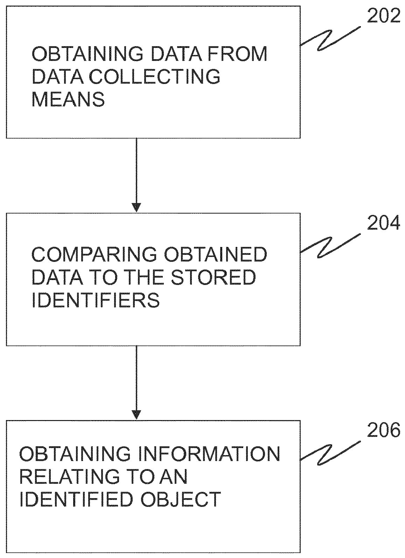

Fig. 2 is a general flow chart of a method according to an embodiment of the present invention. According to an embodiment of the present invention, a method for identifying an object in connection with transportation comprises at least following steps:
At step 202, the image/video data from data collecting means is obtained into data processing means. Data can be transferred from one of the data collecting means or a user can make a request for identification by sending data, which data can be a photo or a video, for example.
At step 204, the obtained data is compared to the stored identifiers. Preferably, this step utilizes known methods for image recognition in order to find a suitable identifier. In an embodiment, the image recognition is arranged to prioritize one or more identifiers over the others so that more significant identifiers are used first in the comparison, and less significant identifiers are used next if required for achieving a reliable match. For example, in case the used image recognition finds number and/or letters in the picture, it is advantageous to try to compare those with identifiers relating register plates and/or other register numbers.

In an embodiment, the step 204 is repeated in case there are one or more other identifiers to be found in the data. For example, after identified a transport means, the method can be arranged to further identify possible containers, a load, a loading site and/or personnel.

In an embodiment, the obtained data at step 202 is stored after the object in question has been identified. In a preferable embodiment, the data is tagged with one or more suitable identifiers when storing it. The database can also be updated with possible new identifiers, which are recognized from the collected data.

At step 206, information relating to an identified object is obtained. Depending on embodiment, the arrangement can provide different kind of information relating to the identified object. As an example, in case of transport means, the arrangement, after identifying the transport means can provide information, such as a load-carrying limit, the origin of the delivery, recipient, consignor, the name and type of the material, security classification and a driver of the transport means, for example.

In an embodiment, the method further comprises an initializing step, wherein a number of identifiers relating to a number of objects are stored in said database. The initializing step can be performed in any phase, when a new objects/identifiers need to be stored to the database.

The scope of the invention is determined by the attached claims together with the equivalents thereof. The skilled persons will appreciate the fact that the explicitly disclosed embodiments were constructed for illustrative purposes only, and the scope will cover further embodiments, embodiment combinations, manufacturing processes, and equivalents that better suit each particular implementation of the invention.

## Claims

1. An arrangement for identifying an object in connection with transportation comprising
- a number of data collecting means for collecting image data, the image data comprising images of objects in connection with transportation, and
- data processing means for obtaining, storing and processing the collected data, the data processing means comprising at least one cloud server,
wherein said data processing means comprises a database of objects in connection with transportation, the database comprising object-related identifiers for identifying the object,
wherein the data processing means are arranged to recognize an object in connection with transportation from the collected image data, and to compare the data of the recognized object with the identifiers of the object database, and based on the comparison to identify the recognized object.

2. An arrangement according to claim 1, wherein said identifiers are selected from a group comprising at least: register plates, serial numbers, other characters, pictures, decorations, marks, forms, colors, markings, damages, deviations and equipment.

3. An arrangement according to any preceding claim, wherein identifier types have mutual priorities in identification of the object.

4. An arrangement according to any preceding claim, wherein said object in connection with transportation is selected from a group comprising at least: trucks, trains, train wagons, ships, containers, lorries, cars, heavy-duty vehicles, wheel loaders, forklifts, container cranes, industrial cranes, timber cranes, load types, loading sites and persons in connection with transportation.

5. An arrangement according to any preceding claim, wherein said data collecting means are selected from a group comprising at least: cameras, video cameras, surveillance cameras and infrared cameras.

6. An arrangement according to any preceding claim, wherein the data processing means are arranged to apply artificial intelligence, such as a self-learning neural network, in recognizing objects from image data and/or in identifying the object based on the identifiers of the database.

7. A method for identifying an object in connection with transportation comprising
- collecting image data from a number of locations, the image data comprising images of objects in connection with transportation,
- obtaining, the collected data to at least one cloud server for storing and processing the collected data, and
- providing a database of objects in connection with transportation, and providing the database with object-related identifiers for identifying the object,
wherein an object in connection with transportation is recognized from the collected image data, and the data of the recognized object is compared with the identifiers of the object database, and based on the comparison the recognized object is identified.

8. A method according to claim 7 further comprising an initializing step, wherein a number of identifiers relating to a number of objects are stored in said database.

9. A method according to claim 7 or 8, wherein after identifying the object the database is updated by adding the new collected identifier(s) to the object-related identifiers of the database.

10. A method according to any of claims 7-9, wherein the database is provided with further transportation related data of objects on the database.

11. A method according to claim 10, wherein the object is a transport means, and the database is provided with at least one data from the group of weight, transportation route, loading instructions, maximum load weight, security classification, driver information, owner, and other specifications of the transportation means.

12. A method according to claim 10, wherein the object is a piece of load, and the database is provided with at least one data from the group of weight, size, load type / material, type and contents of a box/container, origin and destination, transportation route, recipient information, loading instructions, security classification, and other specifications of the load.

13. A method according to any of claims 10-12, wherein after identifying the object, transportation related data of the object is read from the database for logistic purposes.

14. A method according to any of claims 7-13, wherein recognizing objects from image data and/or in identifying the object based on the identifiers of the database is implemented by using apply artificial intelligence or machine learning, such as a self-learning neural network.
